# EUROPÄISCHE PATENTSCHRIFT

(11) **EP 4 122 631 B1**
(45) Veröffentlichungstag und Bekanntmachung des Hinweises auf die Patenterteilung: **20.08.2025**
(21) Anmeldenummer: 22182973.2
(22) Anmeldetag: 05.07.2022
(51) Int. Cl.: B23K 7/10, B23K 7/00

(54) **VERFAHREN ZUR ÜBERWACHUNG EINES BRENNSCHNEIDPROZESSES**
METHOD FOR MONITORING A BURNING CUTTING PROCESS
PROCÉDÉ DE SURVEILLANCE D'UN PROCESSUS D'OXYCOUPAGE

(30) Priorität: 06.07.2021 US 202117367857; 15.09.2021 DE 102021123839
(43) Veröffentlichungstag der Anmeldung: 25.01.2023
(73) Patentinhaber: IHT Automation GmbH & Co. KG, 76532 Baden-Baden (DE); The Penn State Research Foundation, University Park, PA 16802 (US)
(72) Erfinder: Romanelli, Giuseppe, 77815 Bühl (DE); Biskaborn, Marcel, 77704 Oberkirch (DE); Martin, Christopher Reed, Hollidaysburg, PA 16648 (US)
(74) Vertreter: Patentanwälte Bregenzer und Reule Partnerschaftsgesellschaft mbB

(56) Entgegenhaltungen:
- DE-A1- 1 954 030
- US-A- 5 470 047
- US-A1- 2016 018 812

## Beschreibung

Die Erfindung betrifft ein Verfahren zur Überwachung eines Brennschneidprozesses gemäß Oberbegriff des Anspruchs 1.

Bei einem Brennschneidprozess erzeugt ein Schneidbrenner durch Verbrennung einer Gasmischung eine Flamme und beaufschlagt mit dieser ein zu schneidendes Werkstück. Dabei wird das Werkstück zunächst während einer Vorheizphase aufgeheizt, bevor die Flamme in einer Lochstechphase ein Loch durch das Werkstück durchsticht. Anschließend an die Lochstechphase wird in einer Schneidphase das Werkzeug geschnitten, indem der Brenner im Abstand zum Werkzeug entlang einer Schneidlinie bewegt wird. Dabei wird der Abstand des Schneidbrenners zum Werkstück in den unterschiedlichen Phasen unterschiedlich eingeregelt. Während in der Vorheizphase ein schnelles Aufheizen durch Einstellung eines geringen Abstands bevorzugt wird, spritzt in der Lochstechphase oft Material wie Schlacke vom Werkstück, so dass der Schneidbrenner dann bevorzugt weiter vom Werkstück entfernt wird. Nach Durchstechen des Lochs und beim Übergang zur Schneidphase wird der Abstand zum Werkstück dann meist wieder verringert. Dabei wird der Fortschritt des Brennschneidprozesses meist von einer Bedienperson überwacht, welche erkennt, in welcher der Phasen sich der Brennschneidprozess befindet. Dies ist aufwendig und oft auch weniger zuverlässig.

Ein Verfahren gemäß Oberbegriff des Anspruchs 1 ist aus der US 2016/0018812 A1 bekannt. Bei diesem Verfahren wird bei Erreichen hoher Temperaturen ein Stromanstieg aufgrund der aus dem Material austretenden Elektronen detektiert. Weiter ist aus der US 5 470 047 A ein Verfahren bekannt, bei dem während eines Brennschneidprozesses eine an einem Messwiderstand abfallende Spannung gemessen wird. Diese steigt zum Ende einer Aufheizphase sprunghaft an, wobei durch Anlage einer genügend hohen Spannung die Flamme des Schneidbrenners stets gesättigt ist.

Es ist daher Aufgabe der Erfindung, ein Verfahren der eingangs genannten Art derart weiterzubilden, dass es in höherem Maße automatisiert werden kann.

Diese Aufgabe wird erfindungsgemäß durch ein Verfahren mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass die Flamme elektrisch leitend ist und somit ein elektrischer Strom durch die Flamme fließen kann, sofern zumindest ein Teil des Schneidbrenners und das Werkstück jeweils elektrisch leitend sind. Die Möglichkeit des automatischen Erkennens des Zündpunkts, an dem das Durchstechen des Lochs durch das Werkstück mittels der Flamme durch Oxidation des Werkstücks beginnt, aufgrund einer Änderung des über den Schneidbrenner durch die Flamme zum Werkstück fließenden gemessenen Stroms wurde von der Anmelderin experimentell gefunden. Es ist somit möglich, durch eine Überwachung des gemessenen Stroms zu erkennen, wenn das Durchstechen des Lochs durch das Werkstück beginnt, so dass die Abstandsregelung dann automatisch vorgenommen werden kann, ohne dass eine Bedienperson eingreifen muss.

Zur Erhöhung der Genauigkeit des Verfahrens ist erfindungsgemäß vorgesehen, dass mittels einer Spannungsquelle zwischen einem elektrisch leitenden Teil des Schneidbrenners und dem Werkstück zumindest während des Messzeitraums, während dem der Strom gemessen wird, eine konstante Spannung angelegt wird. Die Spannung ist vorzugsweise eine Gleichspannung, kann aber auch eine Wechselspannung sein.

Gemäß der Erfindung ist die während des Messzeitraums angelegte Spannung höchstens so groß wie eine erste vorgegebene Spannung, und der Zündpunkt wird durch einen Abfall des gemessenen Stroms detektiert. Die erste vorgegebene Spannung beträgt zweckmäßig weniger als 5 Volt und vorzugsweise höchstens 4 Volt, weiter vorzugsweise höchstens 3 Volt. Es wurde experimentell gefunden, dass bei solch niedrigen Spannungen am Zündpunkt ein signifikanter Abfall des gemessenen Stroms detektierbar ist.

Zweckmäßig wird während des Messzeitraums der Abstand des Schneidbrenners zum Werkstück konstant gehalten. Dadurch wird vermieden, dass sich der gemessene Strom durch Änderung des Abstands ändert. Aus demselben Grund wird während des Messzeitraums zweckmäßig die der Flamme zugeführte Gasmischung konstant gehalten.

Wenn der Zündpunkt mittels Anlegen einer geringen Spannung, welche höchstens so groß ist wie die erste vorgegebene Spannung, durch einen Abfall des gemessenen Stroms detektiert wird, kann gemäß einer vorteilhaften Weiterbildung der Erfindung vorgesehen sein, dass der Zündpunkt des Weiteren durch einen dem Abfall vorangehenden Anstieg des gemessenen Stroms während der Vorheizphase detektiert wird. Es wurde experimentell gefunden, dass typischerweise vor Erreichen des Zündpunkts in der Vorheizphase der gemessene Strom annähend kontinuierlich ansteigt. Dieser dem folgenden Abfall des gemessenen Stroms vorangehende Anstieg kann als weiteres Indiz für das Erreichen des Zündpunkts angesehen werden, um die Detektion des Zündpunkts zuverlässiger zu machen.

Zweckmäßig werden nach der Detektion des Zündpunkts der Abstand des Schneidbrenners zum Werkstück und die der Flamme zugeführte Gasmischung mittels einer Regeleinrichtung geregelt. Dabei wird vorzugsweise der Abstand des Schneidbrenners zum Werkstück mittels der Regeleinrichtung vergrößert. Nach Vollendung des Durchstechens des Lochs wird der Abstand des Schneidbrenners zum Werkstück mittels der Regeleinrichtung vorzugsweise wieder verringert. Zudem wird nach der Detektion des Zündpunkts zweckmäßig mittels der Regeleinrichtung die Menge und/oder der Anteil des brennbaren Gases in der Gasmischung erhöht, und der Flamme wird zusätzlicher Schneidsauerstoff zugeführt.

Es wird bevorzugt, dass das Werkstück während des Messzeitraums geerdet ist. Zudem wird bevorzugt, dass der elektrisch leitende Teil des Schneidbrenners gegenüber dem Werkstück elektrisch isoliert ist, so dass zwischen dem Schneidbrenner und dem Werkstück nur durch die Flamme ein elektrischer Strom fließen kann. Zweckmäßig weist der elektrisch leitende Teil des Schneidbrenners eine dem Werkstück zugewandte Brennerspitze auf.

Im Folgenden wird die Erfindung anhand zweier in der Zeichnung schematisch dargestellter Ausführungsbeispiele näher erläutert. Es zeigen
- Fig. 1: den über der Zeit aufgetragenen, bei einem Verfahren zur Überwachung eines Brennschneidprozesses gemessenen Strom gemäß einem ersten Ausführungsbeispiel und
- Fig. 2: den über der Zeit aufgetragenen, bei einem Verfahren zur Überwachung eines Brennschneidprozesses gemessenen Strom gemäß einem zweiten Ausführungsbeispiel.

Die in der Zeichnung dargestellten Stromkurven wurden jeweils während eines Brennschneidprozesses 10 gemessen und dienen der Überwachung des Brennschneidprozesses 10. Dabei wird ein Strom I gemessen, der von einer elektrisch leitenden Brennerspitze des beim Brennschneidprozess 10 verwendeten Schneidbrenners durch eine vom Schneidbrenner erzeugte Flamme zum elektrisch leitenden, geerdeten und von der Flamme beaufschlagten Werkstück fließt. Beim Brennschneidprozess 10 wird das Werkstück zunächst in einer Vorheizphase 12 mittels der Flamme aufgeheizt. Auf die Vorheizphase 12 folgt eine Lochstechphase 14, in der das erhitzte Werkstück im Bereich der Flamme oxidiert wird und die Flamme ein Loch durch das Werkstück sticht. Ist durch das Werkstück ein Loch durchgestochen, kann es entlang einer Schnittlinie durchgeschnitten werden, indem die Flamme während einer Schneidphase 16 durch Bewegung des Schneidbrenners entlang der Schnittlinie bewegt wird.

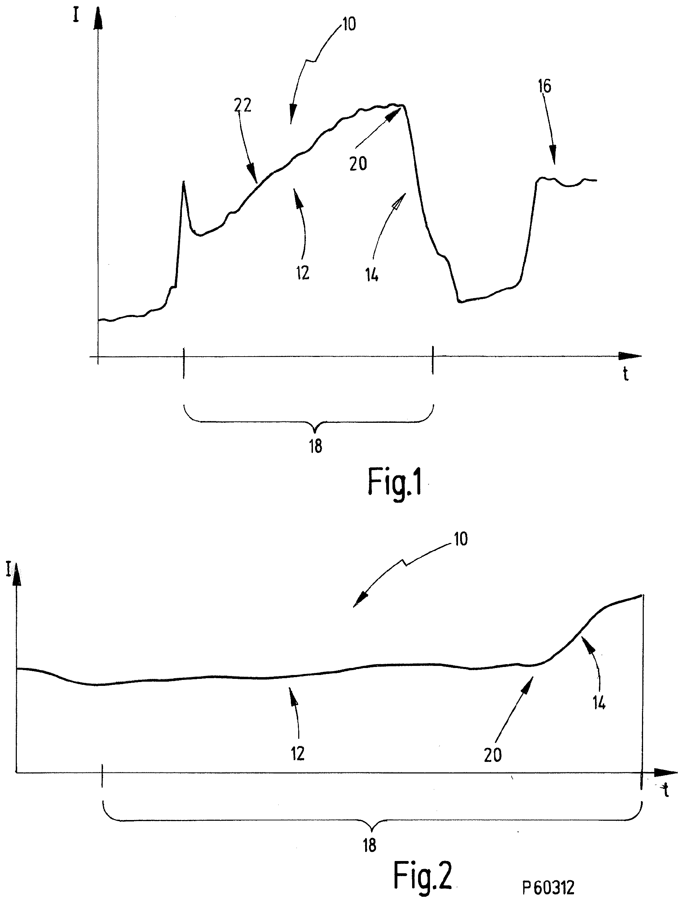

Mittels einer Gleichspannungsquelle wird zwischen der Brennerspitze und dem Werkstück während eines die Vorheizphase 12 und den Beginn der Lochstechphase 14 umfassenden Messzeitraums 18 eine konstante Gleichspannung angelegt, welche beim in Fig. 1 dargestellten ersten Ausführungsbeispiel 3 Volt beträgt, und der Abstand der Brennerspitze zum Werkstück wird ebenso konstant gehalten wie die Zusammensetzung der der Flamme zugeführten Gasmischung. Mittels eines Strommessgeräts wird der von der Brennerspitze durch die Flamme zum Werkstück fließende Strom I gemessen, welcher in Fig. 1 über der Zeit t aufgetragen ist. Der als Zündpunkt 20 bezeichnete Beginn der Lochstechphase 14 ist dabei durch einen abrupten Abfall des gemessenen Stroms I gekennzeichnet. Ein weiteres Charakteristikum des Zündpunkts 20 ist ein ihm vorausgehender nahezu kontinuierlicher Anstieg 22 des gemessenen Stroms I während der Vorheizphase 12.

Das zweite Ausführungsbeispiel gemäß Fig. 2 unterscheidet sich vom ersten Ausführungsbeispiel nur darin, dass während des Messzeitraums 18 eine höhere Gleichspannung von konstant 6 Volt angelegt wird, was einen grundlegend unterschiedlichen Verlauf des gemessenen Stroms I über der Zeit t nach sich zieht. Der das Ende der Vorheizphase 12 und den Beginn der Lochstechphase 14 des Brennschneidprozesses 10 markierende Zündpunkt 20 wird bei diesem Ausführungsbeispiel durch einen charakteristischen abrupten Anstieg des gemessenen Stroms I charakterisiert. Auch der beim ersten Ausführungsbeispiel auftretende kontinuierliche Anstieg 22 des gemessenen Stroms I während der Vorheizphase 12 ist hier nicht gegeben.

Die beschriebene Detektion des Zündpunkts 20 anhand der Änderung des gemessenen Stroms I wird zur Regelung des Brennschneidprozesses 10 herangezogen. Während in der Vorheizphase 12 ein maximaler Wärmeeintrag in das Werkstück angestrebt wird, zu dessen Zweck der Abstand zwischen der Brennerspitze und dem Werkstück gering gehalten wird, ist eine Erhöhung dieses Abstands während der Lochstechphase 14 vorteilhaft, um Beschädigungen des Schneidbrenners durch hochspritzende Schlacke zu vermeiden. Wird die charakteristische Änderung des gemessenen Stroms I am Zündpunkt 20 erkannt und somit der Zündpunkt 20 automatisch detektiert, so wird mittels einer Regeleinrichtung der Abstand der Brennerspitze zum Werkstück automatisch vergrößert. Des weiteren wird der Anteil des brennbaren Gases in der der Flamme zugeführten Gasmischung erhöht, und es wird der Flamme zusätzlicher Schneidsauerstoff zugeführt. Nach Ende der Lochstechphase 14 und zu Beginn der Schneidphase 16 wird der Abstand der Brennerspitze zum Werkstück wieder verringert. Über den gesamten Zeitraum des Brennschneidprozesses 10, also über den Messzeitraum 18 hinaus, wird bei den hier gezeigten Ausführungsbeispielen die Gleichspannung konstant gehalten. Der gemessene Strom I wird dann nicht nur durch die Leitfähigkeit der Flamme, sondern auch durch den sich ändernden Abstand der Brennerspitze zum Werkstück beeinflusst.

Zusammenfassend ist folgendes festzuhalten: Die Erfindung betrifft ein Verfahren zur Überwachung eines Brennschneidprozesses 10, welcher eine Vorheizphase 12, eine auf die Vorheizphase 12 folgende Lochstechphase 14 und eine auf die Lochstechphase 14 folgende Schneidphase 16 aufweist, wobei ein Schneidbrenner ein elektrisch leitendes Werkstück mit einer durch Verbrennung einer Gasmischung erzeugten Flamme beaufschlagt und wobei ein zwischen einem elektrisch leitenden Teil des Schneidbrenners und dem Werkstück fließender elektrischer Strom I mittels eines Strommessgeräts während eines Messzeitraums 18 gemessen wird. Erfindungsgemäß ist vorgesehen, dass ein Zündpunkt 20, an dem das Durchstechen eines Lochs durch das Werkstück mittels der Flamme durch Oxidation des Werkstücks beginnt, durch eine Änderung des gemessenen Stroms I detektiert wird.

## Patentansprüche

1. Verfahren zur Überwachung eines Brennschneidprozesses (10), welcher eine Vorheizphase (12), eine auf die Vorheizphase (12) folgende Lochstechphase (14) und eine auf die Lochstechphase (14) folgende Schneidphase (16) aufweist, wobei ein Schneidbrenner ein elektrisch leitendes Werkstück mit einer durch Verbrennung einer Gasmischung erzeugten Flamme beaufschlagt und wobei ein zwischen einem elektrisch leitenden Teil des Schneidbrenners und dem Werkstück fließender elektrischer Strom (I) mittels eines Strommessgeräts während eines Messzeitraums (18) gemessen wird, **dadurch gekennzeichnet, dass** ein Zündpunkt (20), an dem das Durchstechen eines Lochs durch das Werkstück mittels der Flamme durch Oxidation des Werkstücks beginnt, durch eine Änderung des gemessenen Stroms (I) detektiert wird, dass mittels einer Spannungsquelle zwischen dem elektrisch leitenden Teil des Schneidbrenners und dem Werkstück zumindest während des Messzeitraums (18) eine konstante Spannung angelegt wird, dass die Spannung höchstens so groß ist wie eine erste vorgegebene Spannung und dass der Zündpunkt (20) durch einen Abfall des gemessenen Stroms (I) detektiert wird.

2. Verfahren nach Anspruch 1, **dadurch gekennzeichnet, dass** die Spannung eine Gleichspannung ist.

3. Verfahren nach Anspruch 1, **dadurch gekennzeichnet, dass** die Spannung eine Wechselspannung ist.

4. Verfahren nach einem der vorangehenden Ansprüche, **dadurch gekennzeichnet, dass** während des Messzeitraums (18) der Abstand des Schneidbrenners zum Werkstück konstant gehalten wird.

5. Verfahren nach einem der vorangehenden Ansprüche, **dadurch gekennzeichnet, dass** während des Messzeitraums (18) die der Flamme zugeführte Gasmischung konstant gehalten wird.

6. Verfahren nach einem der vorangehenden Ansprüche, **dadurch gekennzeichnet, dass** der Zündpunkt (20) weiter durch einen dem Abfall vorangehenden Anstieg (22) des gemessenen Stroms (I) während der Vorheizphase (12) detektiert wird.

7. Verfahren nach einem der vorangehenden Ansprüche, **dadurch gekennzeichnet, dass** nach der Detektion des Zündpunkts (20) der Abstand des Schneidbrenners zum Werkstück und die der Flamme zugeführte Gasmischung mittels einer Regeleinrichtung geregelt werden.

8. Verfahren nach Anspruch 7, **dadurch gekennzeichnet, dass** nach der Detektion des Zündpunkts (20) der Abstand des Schneidbrenners zum Werkstück mittels der Regeleinrichtung vergrößert wird.

9. Verfahren nach Anspruch 8, **dadurch gekennzeichnet, dass** nach Vollendung des Durchstechens des Lochs der Abstand des Schneidbrenners zum Werkstück mittels der Regeleinrichtung wieder verringert wird.

10. Verfahren nach einem der Ansprüche 7 bis 9, **dadurch gekennzeichnet, dass** nach der Detektion des Zündpunkts (20) mittels der Regeleinrichtung die Menge und/oder der Anteil des brennbaren Gases in der Gasmischung erhöht und der Flamme zusätzlicher Schneidsauerstoff zugeführt wird.

11. Verfahren nach einem der vorangehenden Ansprüche, **dadurch gekennzeichnet, dass** die erste vorgegebene Spannung weniger als 5 Volt und vorzugsweise höchstens 4 Volt, weiter vorzugsweise höchstens 3 Volt beträgt.

12. Verfahren nach einem der vorangehenden Ansprüche, **dadurch gekennzeichnet, dass** das Werkstück während des Messzeitraums geerdet ist.

13. Verfahren nach einem der vorangehenden Ansprüche, **dadurch gekennzeichnet, dass** der elektrisch leitende Teil des Schneidbrenners gegenüber dem Werkstück elektrisch isoliert ist.

14. Verfahren nach einem der vorangehenden Ansprüche, **dadurch gekennzeichnet, dass** der elektrisch leitende Teil des Schneidbrenners eine dem Werkstück zugewandte Brennerspitze aufweist.

## Claims

1. Method for monitoring a flame cutting process (10), which comprises a preheating phase (12), a piercing phase (14) following the preheating phase (12) and a cutting phase (16) following the piercing phase (14), wherein a cutting torch applies a flame generated by combustion of a gas mixture to an electrically conductive workpiece and wherein an electric current (I) flowing between an electrically conductive part of the cutting torch and the workpiece is measured by means of a current measuring device during a measuring period (18), **characterized in that** an ignition point (20) at which piercing of a hole through the workpiece by means of the flame starts due to oxidation of the workpiece is detected by a change in the measured current (I), that a constant voltage is applied by means of a voltage source between the electrically conductive part of the cutting torch and the workpiece at least during the measuring period (18), that the voltage is at most as large as a first predetermined voltage and that the ignition point (20) is detected by a drop in the measured current (I).

2. Method according to claim 1, **characterized in that** the voltage is a DC voltage.

3. Method according to claim 1, **characterized in that** the voltage is an alternating voltage.

4. Method according to any one of the preceding claims, **characterized in that** the distance between the cutting torch and the workpiece is kept constant during the measuring period (18).

5. Method according to any one of the preceding claims, **characterized in that** the gas mixture supplied to the flame is kept constant during the measuring period (18).

6. Method according to any one of the preceding claims, **characterized in that** the ignition point (20) is further detected by an increase (22) in the measured current (I) during the preheating phase (12) preceding the drop.

7. Method according to any one of the preceding claims, **characterized in that**, after detection of the ignition point (20), the distance of the cutting torch from the workpiece and the gas mixture supplied to the flame are controlled by means of a control device.

8. Method according to claim 7, **characterized in that**, after detection of the ignition point (20), the distance of the cutting torch from the workpiece is increased by means of the control device.

9. Method according to claim 8, **characterized in that**, after completion of the piercing of the hole, the distance of the cutting torch from the workpiece is reduced again by means of the control device.

10. Method according to any one of the claims 7 to 9, **characterized in that**, after detection of the ignition point (20) by means of the control device, the quantity and/or proportion of the combustible gas in the gas mixture is increased and additional cutting oxygen is supplied to the flame.

11. Method according to any one of the preceding claims, **characterized in that** the first predetermined voltage is less than 5 volts and preferably at most 4 volts, further preferably at most 3 volts.

12. Method according to any one of the preceding claims, **characterized in that** the workpiece is grounded during the measurement period.

13. Method according to any one of the preceding claims, **characterized in that** the electrically conductive part of the cutting torch is electrically insulated from the workpiece.

14. Method according to any one of the preceding claims, **characterized in that** the electrically conductive part of the cutting torch has a torch tip facing the workpiece.

## Revendications

1. Procédé de surveillance d'un processus d'oxycoupage (10), lequel comprend une phase de préchauffage (12), une phase de perçage de trou (14) qui suit la phase de préchauffage (12) et une phase de découpe (16) qui suit la phase de perçage de trou (14), un chalumeau de découpe soumettant une pièce ouvrée électriquement conductrice à une flamme produite par la combustion d'un mélange gazeux et un courant électrique (I) qui circule entre une partie électriquement conductrice du chalumeau de découpe et la pièce ouvrée étant mesuré au moyen d'un ampèremètre pendant une période de mesure (18), **caractérisé en ce qu'**un point d'allumage (20), auquel commence la perforation d'un trou à travers la pièce ouvrée au moyen de la flamme par oxydation de la pièce ouvrée, est détecté par une modification du courant (I) mesuré, **en ce qu'**une tension constante est appliquée au moyen d'une source de tension entre la partie électriquement conductrice du chalumeau de découpe et la pièce ouvrée au moins pendant la période de mesure (18), **en ce que** la tension est au plus égale à une première tension prédéfinie et **en ce que** le point d'allumage (20) est détecté par une chute du courant (I) mesuré.

2. Procédé selon la revendication 1, **caractérisé en ce que** la tension est une tension continue.

3. Procédé selon la revendication 1, **caractérisé en ce que** la tension est une tension alternative.

4. Procédé selon l'une des revendications précédentes, **caractérisé en ce que** la distance entre le chalumeau de découpe et la pièce ouvrée est maintenue constante pendant la période de mesure (18).

5. Procédé selon l'une des revendications précédentes, **caractérisé en ce que** le mélange gazeux acheminé à la flamme est maintenu constant pendant la période de mesure (18).

6. Procédé selon l'une des revendications précédentes, **caractérisé en ce que** le point d'allumage (20) est en outre détecté par une augmentation (22), qui précède la chute, du courant (I) mesuré pendant la phase de préchauffage (12).

7. Procédé selon l'une des revendications précédentes, **caractérisé en ce qu'**après la détection du point d'allumage (20), la distance entre le chalumeau de découpe et la pièce ouvrée ainsi que le mélange gazeux acheminé à la flamme sont régulés au moyen d'un dispositif de régulation.

8. Procédé selon la revendication 7, **caractérisé en ce qu'**après la détection du point d'allumage (20), la distance entre le chalumeau de découpe et la pièce ouvrée est augmentée au moyen du dispositif de régulation.

9. Procédé selon la revendication 8, **caractérisé en ce qu'**après l'achèvement complet du perçage du trou, la distance entre le chalumeau de découpe et la pièce ouvrée est à nouveau réduite au moyen du dispositif de régulation.

10. Procédé selon l'une des revendications 7 à 9, **caractérisé en ce qu'**après la détection du point d'allumage (20), la quantité et/ou la proportion de gaz combustible dans le mélange gazeux est augmentée et de l'oxygène de coupe supplémentaire est acheminé à la flamme au moyen du dispositif de régulation.

11. Procédé selon l'une des revendications précédentes, **caractérisé en ce que** la première tension prédéfinie est inférieure à 5 volts et de préférence inférieure ou égale à 4 volts, et encore de préférence inférieure ou égale à 3 volts.

12. Procédé selon l'une des revendications précédentes, **caractérisé en ce que** la pièce ouvrée est reliée à la terre pendant la période de mesure.

13. Procédé selon l'une des revendications précédentes, **caractérisé en ce que** la partie électriquement conductrice du chalumeau de découpe est isolée électriquement par rapport à la pièce ouvrée.

14. Procédé selon l'une des revendications précédentes, **caractérisé en ce que** la partie électriquement conductrice du chalumeau de découpe possède une pointe de chalumeau qui fait face à la pièce ouvrée.
